(19)

Europäisches Patentamt
European Patent Office
Office européen des brevets

(11) **EP 4 177 306 A1**

(12) **EUROPEAN PATENT APPLICATION**

(43) Date of publication:
**10.05.2023 Bulletin 2023/19**

(21) Application number: **22202794.8**

(22) Date of filing: **20.10.2022**

(51) International Patent Classification (IPC):
**C08K 5/5419** *(2006.01)*   **C08L 15/00** *(2006.01)*
**C08L 9/00** *(2006.01)*   **B60C 1/00** *(2006.01)*
**C08K 5/548** *(2006.01)*

(52) Cooperative Patent Classification (CPC):
(C-Sets available)
**C08L 15/00; B60C 1/0016; C08K 5/5419;
C08K 5/548** (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.11.2021   US 202117454094**

(71) Applicant: **The Goodyear Tire & Rubber Company
Akron, OH 44316 (US)**

(72) Inventors:
• **KANG, Jungmee
Macedonia, 44056 (US)**

• **HAHN, Bruce Raymond
Hudson, 44210 (US)**
• **CHE, Justin Yinket
Wadsworth, 44281 (US)**
• **GULAS, Brad Stephen
Fairlawn, 44333 (US)**
• **PAPAKONSTANTOPOULOS, George Jim
Medina, 44256 (US)**
• **DEAN-SIOSS, Stacey Lynne
Broadview Heights, 44147 (US)**

(74) Representative: **Kutsch, Bernd
Goodyear S.A.
Patent Department
Avenue Gordon Smith
7750 Colmar-Berg (LU)**

(54) **SILICA REINFORCED RUBBER COMPOSITION AND TIRE COMPONENT**

(57)    A rubber composition is disclosed comprising a diene-based elastomer, a filler that includes an inorganic filler, preferably silica, and a plurality of silane compounds comprising: a bis(dialkylalkoxysilyl-alkyl) polysulfide coupling agent having the general formula $R_2(R^1O)Si\text{-}(CH_2)_n\text{-}S_p\text{-}(CH_2)_m\text{-}Si(OR^2)R^3_2$; and at least one alkoxysilane compound selected from the group consisting of: a hydrophobating bis(trialkoxyl)silane coupling agent having the general formula $(R^1O)_3Si\text{-}R^4\text{-}Si(OR^2)_3$ and a hydrophobating mono(trialkoxyl)silane dispersing agent having the general formula $(R^1O)_3Si\text{-}R^5$; wherein R, $R^1$, $R^2$, and $R^3$ may be identical or different, each being selected from a monovalent C1 to C5 straight chain or branched alkyl groups, $R^4$ is selected from a divalent C3 to C18 straight chain or branched alkyl or alkenyl groups or aromatic groups, $R^5$ is selected from a monovalent C3 to C18 straight chain or branched alkyl or alkenyl groups or aromatic groups, *m* and *n* may be identical or different, each being in a range from 3 to 18, and *p* is in a range from 2 to 4. Also disclosed is a tire tread and a tire comprising such a rubber composition.

FIG. 1

EP 4 177 306 A1

(52) Cooperative Patent Classification (CPC): (Cont.)

C-Sets
**C08L 15/00, C08L 9/00, C08L 91/00, C08L 25/16,
C08K 3/36, C08K 5/18, C08K 5/548, C08K 5/548,
C08K 5/5419, C08K 5/09, C08K 3/22, C08K 3/06,
C08K 5/47, C08K 5/31**

**Description**

FIELD OF THE INVENTION

This disclosure is related to improving tire compositions, preferably tire tread compositions, and, more specifically, to improved tire tread compositions, such as silica-filled tire tread compositions, and tires using the same.

BACKGROUND OF THE INVENTION

Improved tire tread performance has been identified as a primary technical challenge faced by tire manufacturers. However, it has traditionally been very difficult to improve a tire's performance, such as rolling resistance, stiffness, and tear properties, for example, without compromising one or more of the others. A fundamental understanding of the causes behind this performance tradeoff could present opportunities to explore new materials technologies, which allow the tradeoff to be overcome, to meet product performance needs.

Overall, tire tread characteristics, such as traction, stiffness, tear, tread wear, and rolling resistance, are dependent to a large extent on the dynamic viscoelastic properties of the elastomers utilized in making up a tire. But these tire properties are also affected by the fillers and additives that are used in preparing the rubber compositions that make up the tire tread. For example, it is known that silica fillers may improve rubber properties, such as increased tear resistance, reduced rolling resistance, and increased road traction, and thus improve fuel economy for vehicles. But some difficulties encountered with silica-filled rubber compositions can include difficult dispersibility and deagglomeration of the silica filler, unfavorable green viscosity, and required use of coupling agents, such as polysulfurized alkoxysilanes, many of which produce significant VOC by-products and/or have unfavorable vulcanization kinetics.

Some approaches to improving the processability and dispersibility of silica-filled rubber compositions have focused upon the addition sequence of certain ingredients during mixing, the addition of de-agglomeration agents, and/or using elevated levels of coupling agents.

Alternative approaches have focused on the use of special coupling agents including, for example, replacing the commonly used coupling agent bis(3-triethoxylsilylpropyl) tetrasulfide (abbreviated TESPT) or bis(triethoxysilylpropyl) disulfide (abbreviated TESPD) with modified monoalkoxydialkyl silane polysulfides, such as bis(dimethylethoxysilylpropyl) tetrasulfide (abbreviated MESPT) or bis(dimethylethoxysilylpropyl) disulfide (abbreviated MESPD). In another example, the commonly used TESPT or TESPD has been replaced with 3-octanoylthio-1-propyltriethoxysilane (also called NXT silane) to improve the dispersibility of silica in the silica-containing rubber composition, and reportedly does not impair the original properties of the silica-containing rubber composition

While the foregoing is reported to improve processability and dispersibility of silica-containing rubber compositions, the original properties of the rubber compositions are understood not to be materially improved. Accordingly, new rubber compositions, such as improved silica-filled tire tread compositions (and tires with the same), that provide desirable tire performance properties, such as improvements in hysteresis and/or stiffness without negatively impacting tear and/or tensile strength, for example, are needed.

SUMMARY OF THE INVENTION

The invention relates to a rubber composition in accordance with claim 1, to a tire component or tire tread in accordance with claim 12, to a tire in accordance with claim 13, and to a method in accordance with claim 15.

Dependent claims refer to preferred embodiments of the invention.

In accordance with an embodiment of the invention, a tire tread composition is provided that includes a diene-based elastomer, a filler that includes an inorganic filler (e.g., silica), and a plurality of silane compounds.

The silane compounds include:

i) a bis(dialkylalkoxysilyl-alkyl) polysulfide coupling agent having a general Formula (I):

$$R_2(R^1O)Si - (CH_2)_n - S_p - (CH_2)_m - Si(OR^2)R^3_2 \qquad (I);$$

and

ii) at least one alkoxysilane compound selected from the group consisting of:

a) a hydrophobating bis(trialkoxy)silane coupling agent having a general Formula (II):

$$(R^1O)_3Si - R^4 - Si(OR^2)_3 \qquad (II),$$

and

b) a hydrophobating mono(trialkoxy)silane dispersing agent having a general Formula (III): $(R^1O)_3Si - R^5$ (III);

wherein R, $R^1$, $R^2$, and $R^3$ may be identical or different, each selected from monovalent C1-C5 straight chain or branched alkyl groups, $R^4$ is selected from divalent C3-C18 straight chain or branched alkyl or alkenyl groups or aromatic groups, $R^5$ is selected from monovalent C3-C18 straight chain or branched alkyl or alkenyl groups or aromatic groups, m and *n* may be identical or different with each in a range from 3 to 18; and *p* is in a range from 2 to 4.

By virtue of the foregoing, there is thus provided a tire tread composition, such as a silica-filled tire tread composition, and tire using the same that can provide desirable tire performance properties, such as improvements in hysteresis and/or stiffness without negatively impacting tear and/or tensile strength, for example.

BRIEF DESCRIPTION OF THE DRAWINGS

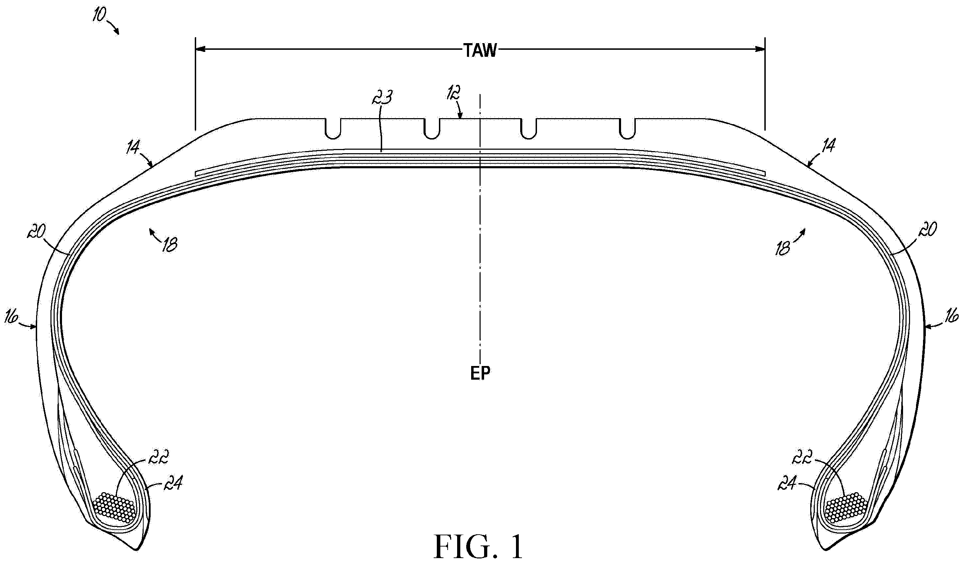

FIG. 1 is a cross-sectional view of a tire with silica-filled tire tread in accordance with an embodiment of the present invention.

DETAILED DESCRIPTION OF PREFERRED EMBODIMENTS OF THE INVENTION

Tires and tire tread compositions are disclosed in various embodiments. However, one skilled in the relevant art will recognize that the various embodiments may be practiced without one or more of the specific details, or with other replacement and/or additional methods, materials, or components. In other instances, well-known structures, materials, or operations are not shown or described in detail to avoid obscuring aspects of various embodiments of the invention.

Similarly, for purposes of explanation, specific numbers, materials, and configurations are set forth in order to provide a thorough understanding of the invention. Nevertheless, the invention may be practiced without specific details.

Reference throughout this specification to "one embodiment" or "an embodiment" or variation thereof means that a particular feature, structure, material, or characteristic described in connection with the embodiment is included in at least one embodiment of the invention, but do not denote that they are present in every embodiment. Thus, the appearances of the phrases such as "in one embodiment" or "in an embodiment" in various places throughout this specification are not necessarily referring to the same embodiment of the invention. Furthermore, the particular features, structures, materials, or characteristics may be combined in any suitable manner in one or more embodiments.

Additionally, it is to be understood that "a" or "an" or "at least one" may be used interchangeably and mean "one or more" unless explicitly stated otherwise.

Various operations will be described as multiple discrete operations in turn, in a manner that is most helpful in understanding the invention. However, the order of description should not be construed as to imply that these operations are necessarily order dependent. In particular, these operations need not be performed in the order of presentation. Operations described may be performed in a different order than the described embodiment. Various additional operations may be performed and/or described operations may be omitted in additional embodiments.

In the description of this invention, the terms "rubber" and "elastomer" where used herein, are used interchangeably, unless otherwise prescribed. The terms "rubber composition," "compounded rubber," and "rubber compound," where used herein, are used interchangeably to refer to "rubber which has been blended or mixed with various ingredients." The term "compound" relates to a "rubber composition" unless otherwise indicated. In addition, the term "phr" refers to parts of a respective material per hundred parts by weight of rubber or elastomer.

FIG. 1 shows a simplified cross-section of a tire 10 (e.g., pneumatic tire) that includes an outer tire tread 12, such as a silica-filled tire tread in accordance with an embodiment of the invention, and a pair of sidewalls 16 wherein the sidewalls 16 are connected to the tire tread 12 by shoulder regions 14. The outer circumferential tire tread 12 is adapted to be ground contacting when the tire 10 is in use. The shoulder regions 14 extend predominantly axially outwardly from the outer tire tread 12. The sidewalls 16 extend predominantly radially inwardly from the shoulder regions 14. Fig. 1 also illustrates the equatorial plane (EP") and the Tread Arc Width ("TAW") of the tire 10.

A carcass 18 of the tire 10 can include one or more continuous radial plies 20 extending from side to side. The carcass 18 is located radially inwardly from the tread 12 and axially inwardly from the sidewalls 16. The carcass 18 acts as a supporting structure for components located axially or radially outwardly from the carcass 18, such as the tread 12 and sidewalls 16. The one or more radial plies 20 may include cords or reinforcing wires of, for example, steel, nylon, polyester, rayon, glass, etc., embedded in a rubber matrix. Carcass 18 of the tire has a pair of axially spaced bead wires 22 around which are wrapped the distal ends of the radial plies 20. The bead wires 22 may include, for example, substantially inextensible coils made of round metal filaments.

The tire 10 further includes at least one circumferential belt ply 23 that is situated between the tire tread 12 and carcass 18. The belt ply 23 can be composed of continuous cord reinforcement, which may include materials conventionally used by those having skill in the art such as, for example, metallic wire (e.g., steel), glass, polyester, nylon, aramid, or other reinforcing material. The cords of the belt ply 23 may also include a plurality of plies of different yarns, e.g., nylon and aramid, which can be helically twisted to form a cable.

In one embodiment, the tire 10 further includes an optional inner liner (or air barrier layer) 24 disposed radially inwardly from the carcass 18. The optional rubber tire inner liner 24 may be any known rubber inner liner for use in pneumatic tires 10. In one example, the rubber inner liner 24 can be a non-butyl general purpose rubber (GPR). In another example, the rubber inner liner 24 can be a sulfur curative-containing halobutyl rubber composition of a halobutyl rubber such as for example chlorobutyl rubber or bromobutyl rubber. Such tire halobutyl rubber based inner liner layer may also contain one or more sulfur curable diene-based elastomers such as, for example, cis 1,4-polyisoprene natural rubber, cis 1,4-polybutadiene rubber and styrene/ butadiene rubber, or mixtures thereof. Rubber inner liner 24 is typically prepared by conventional calendering or milling techniques such as to form a strip of uncured compounded rubber of appropriate width. When the tire 10 is cured, the rubber inner liner 24 becomes an integral, co-cured, part of the tire 10. Tire inner liners, like that of rubber inner liner 24, and their methods of preparation are well known to those having skill in such art.

The tire tread 12, and thus the tire 10, in accordance with embodiments of the invention incorporate elastomer or rubber compositions based on at least each of the following components: (A) a (at least one) diene-based elastomer, (B) a (at least one) reinforcing filler comprising an inorganic filler, and (C) a plurality of silane compounds.

The silane compounds include the following:

i) a bis(dialkylalkoxysilyl-alkyl) polysulfide coupling agent having a general Formula (I):

$$R_2(R^1O)Si - (CH_2)_n - S_p - (CH_2)_m - Si(OR^2)R^3_2 \qquad (I);$$

and

ii) at least one alkoxysilane compound selected from the group consisting of:

a) a hydrophobating bis(trialkoxy)silane coupling agent having a general Formula (II):

$$(R^1O)_3Si - R^4 - Si(OR^2)_3 \qquad (II),$$

and

b) a hydrophobating mono(trialkoxy)silane dispersing agent having a general Formula (III): $(R^1O)_3Si - R^5$ (III);

wherein R, $R^1$, $R^2$, and $R^3$ may be identical or different, each selected from monovalent C1-C5 straight chain or branched alkyl groups; wherein $R^4$ is selected from divalent C3-C18 straight chain or branched alkyl or alkenyl groups or aromatic groups; wherein $R^5$ is selected from monovalent C3-C18 straight chain or branched alkyl or alkenyl groups or aromatic groups; wherein m and n may be identical or different, each in a range from 3 to 18; and wherein p is in a range from 2 to 4.

The expression that the composition is "based on" is to be understood to mean a composition comprising the mix and/or the product of reaction *in situ* of the various constituents used, some of these base constituents being liable to, or intended to, react together, at least in part, during the different phases of manufacture of the rubber compositions, tires or treads, in particular during the vulcanization thereof.

Component A: In the practice of embodiments of the invention, the tire tread composition includes at least one diene-based elastomer, or rubber. Such diene-based elastomers are typically selected from homopolymers and copolymers of conjugated dienes, and copolymers of conjugated diene(s) and vinyl aromatic compound. Such conjugated dienes may, for example, be selected from isoprene and/or 1,3-butadiene, and such vinyl aromatic compounds may be selected from styrene and/or *alpha*-methylstyrene.

Representative examples of suitable conjugated dienes include 1,3-butadiene, 2-methyl-1,3-butadiene, 2,3-di(C1-C5 alkyl)-1,3-butadienes such as, for instance, 2,3-dimethyl-1,3-butadiene, 2,3-diethyl-1,3-butadiene, 2-methyl-3-ethyl-1,3-butadiene, 2-methyl-3-isopropyl-1,3-butadiene, an aryl-1,3-butadiene, 1,3-pentadiene, and 2,4-hexadiene. Representative examples of vinyl-aromatic compounds include styrene, *alpha*-methylstyrene, *ortho-, meta-* and para-methylstyrene, the commercial mixture "vinyltoluene", *para*-tertbutylstyrene, methoxystyrenes, chlorostyrenes, vinylmesitylene, divinylbenzene, and vinylnaphthalene.

Representative examples of suitable diene-based elastomers, include homopolymers such as *cis*-1,4-polyisoprenes (natural and/or synthetic), 3,4-polyisoprenes, *cis*-1,4-polybutadienes, *trans*-1,4-polybutadienes (e.g., 70 to 95 percent *trans*), low vinyl polybutadienes (e.g., 10 to 30 percent vinyl), high vinyl polybutadienes (e.g., 30 to 90 percent vinyl), and copolymers such as styrene/butadiene copolymers, isoprene/butadiene copolymers, styrene/isoprene copolymers, styrene/isoprene/butadiene terpolymers, or combinations thereof.

In accordance with an embodiment, the diene-based elastomer may include two or more diene-based elastomers. For example, a combination of two or more elastomers may be selected from *cis*-1,4-polyisoprene elastomer (natural or synthetic, although natural may be preferred), 3,4-polyisoprene elastomer, butadiene, isoprene/butadiene copolymer elastomer, styrene/isoprene/butadiene elastomer, emulsion and solution polymerization derived styrene/butadiene elastomer, *cis*-1,4-polybutadiene elastomers (such as high-*cis* (>90 percent *cis*) or low-*cis* (30 to 90 percent *cis*)), medium vinyl polybutadiene elastomers (30 to 55 percent vinyl), high vinyl polybutadiene elastomers (55 to 90 percent vinyl), and emulsion polymerized butadiene/acrylonitrile copolymer elastomers.

The copolymer elastomers may contain between 99% and 20% by weight of the diene units and between 1% and 80% by weight of vinyl aromatic units. The elastomers may have any microstructure, which is a function of the polymerization conditions used, in particular of the presence or absence of a modifying and/or randomizing agent and the quantities of modifying and/or randomizing agent used. The elastomers may for example be block, statistical, sequential or microsequential elastomers, and may be prepared in dispersion or in solution; they may be coupled and/or starred.

The diene-based elastomers may be alternatively functionalized with a coupling and/or functionalizing agent. The functional groups of the functionalized diene-based elastomer may be positioned as individual groups (e.g., pendent groups) along the elastomer chain in a randomly spaced manner and/or in blocks of a plurality of said functional groups which may be generally exclusive of the terminal ends of the elastomer. Alternatively, one or more functional groups may be positioned at a terminal end of the elastomer.

A first category of functional groups for the functionalized diene-based elastomer is intended to include groups that provide an adsorptive interaction with the precipitated silica aggregates. In particular, the first category of functional groups are considered herein as being significant in a sense of providing a degree of basicity and/or polarity to the conjugated diene-based elastomer to, in general, promote an adsorptive interaction with the typically relatively acidic and polar nature of the said precipitated silica aggregates to, in turn, promote a separation of said precipitated silica aggregates and thereby retard their agglomeration within the elastomer host.

The second category of functional groups for the functionalized diene-based elastomer is intended to include groups that form chemical bonds to the hydroxyl groups (e.g., silanol groups) of the precipitated silica aggregates. In particular, the second category of functional groups are considered herein as being significant by providing covalent bonding to the hydroxyl groups (e.g., silanol groups) on the surface of the precipitated silica aggregates (particles), serving to both retard their agglomeration within the elastomer host and, in addition, to promote an improvement in various physical properties of the resulting vulcanized rubber composition.

In an embodiment, a first category of functional groups is selected from at least one of aliphatic amine, aryl amine, heterocyclic amine and amide groups, and benzophenone groups. In an embodiment, a second category of functional groups is selected from at least one of silanol, alkoxysilane, halogenated benzene, ketone, alcohol, aldehyde, ester, and epoxy groups.

In an embodiment, the diene-based elastomer is selected from the group consisting of polybutadienes, natural rubber, synthetic polyisoprenes, butadiene copolymers, isoprene copolymers, and mixtures thereof. In another embodiment, the butadiene copolymers or isoprene copolymers are selected from the group consisting of unfunctionalized butadiene-styrene copolymers, unfunctionalized butadiene-isoprene copolymers, unfunctionalized isoprene-styrene copolymers, unfunctionalized butadiene-styrene-isoprene copolymers, and mixtures thereof. In another embodiment, the butadiene copolymers or isoprene copolymers are selected from the group consisting of functionalized butadiene-styrene copolymers, functionalized butadiene-isoprene copolymers, functionalized isoprene-styrene copolymers, functionalized butadiene-styrene-isoprene copolymers, and mixtures thereof. In yet another embodiment, the diene-based elastomer comprises a mixture of functionalized and unfunctionalized butadiene copolymers or isoprene copolymers. In yet another embodiment, the diene-based elastomer is a mixture of functionalized and unfunctionalized butadiene and/or isoprene copolymers.

Component B: In the practice of embodiments of the invention, the tire tread composition further includes a reinforcing filler that includes an inorganic filler. In one embodiment, the inorganic filler may constitute all of the total reinforcing filler. In another embodiment, the inorganic filler includes only a part of the total reinforcing filler, for example in combination with carbon black. In one example, the inorganic filler constitutes the majority, that is to say, more than 50% by weight of the total reinforcing filler. In accordance with embodiments of the invention, the inorganic filler is a silica ($SiO_2$) filler, an alumina ($Al_2O_3$) filler, or a mixture thereof. In another embodiment, the reinforcing filler is present in the tire tread composition in a range from 10 to 200 phr (parts by weight per hundred parts of elastomer), such as in a range from 30 phr to 180 phr, or in a range from 50 phr to 150 phr.

The silica filler may be any reinforcing silica filler known to a person skilled in the art of tire manufacturing, in particular any precipitated or fumed silica. Such silicas might usually be characterized, for example, by having a BET surface area, as measured using nitrogen gas, preferably in the range of 40 $m^2$/g to 600 $m^2$/g, or in a range of 50 $m^2$/g to 300 $m^2$/g. The BET method of measuring surface area is described in the Journal of the American Chemical Society, Volume 60, Page 309 (1938), as well as ASTM D5604 for precipitated silica. The silica may also be typically characterized by having a dibutylphthalate (DBP) absorption value in a range of 50 to 400 cc/100 g, or in a range of 100 to 300 cc/100g (measured according to ASTM D2414).

Various commercially available precipitated silicas may be considered for use in this invention such as silicas from PPG Industries under the Hi-Sil trademark with designations Hi-Sil 210 and Hi-Sil 243; silicas from Rhodia as, for example, Zeosil 1165MP and Zeosil 165GR, silicas from Degussa AG with, for example, designations VN2 and VN3, as well as other grades of silica, particularly precipitated silicas, or treated precipitated silicas, such as aluminium-"doped" silicas described in U.S. Patent No. 5,852,099.

The alumina filler may be any reinforcing alumina filler known to a person skilled in the art of tire manufacturing, in particular any highly dispersible alumina having a BET surface area from 30 to 400 $m^2/g$, or in a range from 60 and 250 $m^2/g$. An average particle size can be at most equal to 500 nm, or at most equal to 200 nm, as described in U.S. Patent No. 5,900,449. Examples of such reinforcing alumina fillers are the aluminas A125, CR125, D65CR from Baikowski®.

The carbon black may be any carbon black filler known to a person skilled in the art of tire manufacturing, in particular the carbon black of types HAF, ISAF and SAF, which are conventionally used in tires, and in particular in tire treads, such as the carbon black fillers of series 100 to 300. Examples of such carbon black fillers are in particular carbon blacks N115, N134, N234, N330, N339, N347 and N375. The quantity of carbon black present in the total reinforcing filler may vary within wide limits, however this quantity of carbon black can be less than the quantity of reinforcing inorganic filler present in the rubber composition. For example, in tire tread compositions that include carbon black as a reinforcing co-filler, the carbon black may be included in amounts ranging from 0.1 phr to 30 phr. In another example, the carbon black may be included in an amount ranging from 5 phr to 25 phr. Within the ranges indicated, there can be a benefit from the coloring properties (black pigmentation agent) and anti-UV properties of the carbon blacks, without furthermore adversely affecting the typical performance provided by the reinforcing inorganic filler, namely low hysteresis (reduced rolling resistance) and high adhesion on wet, snow-covered or icy ground.

In one example, the amount of total reinforcing filler (inorganic filler plus carbon black, if applicable) can be from 10 to 200 phr, or from 20 to 150 phr, with the optimum differing according to the intended applications. According to one embodiment, the reinforcing filler comprises between 50 wt% to 100 wt% of silica.

Component C: In the practice of embodiments of the invention, the tire tread composition further includes a plurality of silane compounds, each contributing toward enhanced processing and/or performance characteristics.

In accordance with embodiments of the invention, the tire tread composition includes a bis(dialkylalkoxysilyl-alkyl) polysulfide coupling agent having a general Formula (I):

$$R_2(R^1O)Si - (CH_2)_n - S_p - (CH_2)_m - Si(OR^2)R^3_2 \qquad (I),$$

wherein R, $R^1$, $R^2$, and $R^3$ may be identical or different, each selected from monovalent C1-C5 straight chain or branched alkyl groups, m and $n$ may be identical or different with each in a range from 3 to 18, and $p$ may be in a range from 2 to 4. The bis(dialkylalkoxysilyl-alkyl) polysulfide coupling agent may be a substantially pure compound where $p$ is an integer of 2, 3, or 4. Alternatively, the bis(dialkylalkoxysilyl-alkyl) polysulfide coupling agent having a general Formula (I) includes a plurality of agents having values of $p$ equaling 2, 3, and 4, wherein an average value of $p$ is between 2 and 3. In one embodiment, R, $R^1$, $R^2$, and $R^3$ are independently selected from the group consisting of methyl, ethyl, or propyl. In another embodiment, R and $R^3$ are identical and selected from the group consisting of methyl and ethyl, and $R^1$ and $R^2$ are identical and selected from the group consisting of methyl, ethyl, and propyl. An example of the bis(dialkylalkoxysilyl-alkyl) polysulfide coupling agent having a general Formula (I) is bis(dimethylethoxysilylpropyl) disulfide, which may be commercially available from Shin Etsu Chemical Co., LTD (Japan).

In addition to the bis(dialkylalkoxysilyl-alkyl) polysulfide coupling agent having a general Formula (I), the tire tread composition further includes at least one alkoxysilane compound selected from the group consisting of a hydrophobating bis(trialkoxy)silane coupling agent having a general Formula (II):

$$(R^1O)_3Si - R^4 - Si(OR^2)_3 \qquad (II),$$

and a hydrophobating mono(trialkoxy)silane dispersing agent having a general Formula (III):

$$(R^1O)_3Si - R^5 \qquad (III);$$

wherein $R^1$ and $R^2$ are the same as defined above with respect to Formula (I), $R^4$ is selected from divalent C3-C18 straight chain or branched alkyl or alkenyl groups or aromatic groups, and $R^5$ is selected from monovalent C3-C18 straight chain or branched alkyl or alkenyl groups or aromatic groups. In one embodiment, $R^4$ is selected from divalent C6 to C12 straight chain alkyls, such as hexyl, heptyl, octyl, nonyl, decyl, undecyl, or dodecyl, or aryl groups, such as benzyl and the like. In another embodiment, $R^5$ is selected from monovalent C3 to C12 straight chain alkyls, such as propyl, butyl, hexyl, heptyl, octyl, nonyl, decyl, undecyl, or dodecyl or straight chain alkenyl such as allyl, or aryl groups, such as tolyl (e.g., p-tolyl) and the like, aromatic heterocyclic groups, such as carbazolyl groups, or diphenylphosphino groups. Examples of the hydrophobating bis(trialkoxy)silane coupling agent having a general Formula (II) are 1,8-bis(triethoxysilyl)octane and bis(trimethoxysilylethyl)benzene. Examples of hydrophobating mono(trialkoxy)silane dispersing agent having a general Formula (III) are n-octyltriethoxysilane, p-tolyltrimethoxysilane, 3-carbazolylpropyltriethoxysilane, 3-(diphenylphosphino)propyltriethoxysilane, and 2-(diphenylphosphino)ethxyltriethoxysilane.

In one embodiment, the plurality of silane compounds includes a mixture of the bis(dialkylalkoxysilyl-alkyl) polysulfide coupling agent having a general Formula (I) and the hydrophobating bis(trialkoxyl)silane coupling agent having a general Formula (II).

In another embodiment, the plurality of silane compounds includes a mixture of the bis(dialkylalkoxysilyl-alkyl) polysulfide coupling agent having a general Formula (I) and the hydrophobating mono(trialkoxyl)silane dispersing agent having a general Formula (III).

In yet another embodiment, the plurality of silane compounds includes a mixture of the bis(dialkylalkoxysilyl-alkyl) polysulfide coupling agent having a general Formula (I), the hydrophobating bis(trialkoxyl)silane coupling agent having a general Formula (II), and the hydrophobating mono(trialkoxyl)silane dispersing agent having a general Formula (III).

Taking into account the elastomer quantities expressed above, the content of the plurality of silane compounds is greater than 1 phr, such as between 2 and 20 phr. Expressed another way and taking into account the reinforcing filler quantities expressed above, the content of the silane compounds is greater than 0.5 phf (parts by weight per hundred parts of inorganic filler), such as from 0.5 phf to 20 phf. Below the minimum amounts indicated, the processing and performance effects being often inadequate, whereas beyond the maximum amount advocated, generally no further improvement is observed, while the costs of the composition increase. For these various reasons, in one embodiment, the content of the plurality of silane compounds is preferably from 5 to 18 phr, with the majority being the bis(dialkylalkoxysilyl-alkyl) polysulfide coupling agent having a general Formula (I). In one embodiment, the bis(dialkylalkoxysilyl-alkyl) polysulfide coupling agent having a general Formula (I) is present in a range from 3 phr to 15 phr and the alkoxysilane compound(s) is/are present in a range from 1 phr to 8 phr.

The person skilled in the art should understand that one or more of the silane compounds may be grafted to the inorganic filler beforehand via its alkoxysilyl functional group reacting with the surface hydroxyl groups of the inorganic filler (for example, surface silanols in the case of silica). The inorganic filler thus "precoupled" or "pretreated" then being mixed with the diene-based elastomer.

Without being bound by any particular theory, it is believed that the bis(dialkylalkoxysilyl-alkyl) polysulfide coupling agent having a general Formula (I) functions to couple the inorganic filler to the diene-based elastomer, the hydrophobating bis(trialkoxy)silane coupling agent having a general Formula (II) functions to enhance dispersibility and/or inhibit re-agglomeration of the inorganic filler, but may also couple adjacent particles of inorganic filler together, and the hydrophobating mono(trialkoxy)silane dispersing agent having a general Formula (III) functions to enhance dispersibility and/or inhibit re-agglomeration of the inorganic filler. When used in combination, the plurality of silane compounds may reduce the amount of VOC emissions during curing (vis-à-vis commonly-used TESPT or TESPD), provide enhanced processability, and improved performance characteristics, such as rolling resistance, stiffness, and tear properties of the tire tread and, thus, the tire itself.

Additional Components: The implementation of embodiments of the invention may further include other various, commonly-used additive materials. These additive materials include plasticizers (e.g., tackifying resins or traction resins), processing aids (e.g., oils), antioxidants, antiozonants, fatty acids, zinc oxide, waxes, peptizing agents, and curing aids, such as sulfur, activators, retarders, and accelerators.

Exemplary tackifying resins include hydrocarbon resins, rosin esters, and polyterpenes. Typical amounts of tackifier resins, if used, may, for example, include 0.5 to 10 phr, usually 1 to 5 phr.

Exemplary traction resins include Styrene-AMS, coumarone-indene resins, unmodified hydrogenated DCPD resin, modified hydrogenated DCPD resin, C9/C5 resin, Terpene Phenol resin, Polyterpene (alpha-pinene based), and Polyterpene (beta-pinene based). Typical amounts of traction resins, if used, may, for example, include 1 to 150 phr, or 1 to 70.

Typical amounts of processing aids, if used, may include, for example from 1 to 150 phr, or 1 to 50. Such processing aids can include, for example and where appropriate, aromatic, naphthenic, and/or paraffinic processing oils. Typical amounts of antioxidants where used may include, for example, 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants, where used, may include for example 1 to 5 phr. Typical amounts of fatty acids, if used, which can include stearic acid and combinations of stearic acid with one or more of palmitic acid oleic acid and may include, for example, from 0.5 to 3 phr. Typical amounts of zinc oxide may include, for example, from 1 to 10 phr. Typical amounts of waxes, such as for example microcrystalline waxes, where used, may include, for example, from 1 to 5 phr. Typical amounts of peptizers, if used, may include, for example, from 0.1 to 1 phr.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. In one example, the sulfur vulcanizing agent is elemental sulfur. As known to those skilled in the art, sulfur vulcanizing agents may be used, for example, in an amount ranging from 0.5 to 4 phr, or even, in some circumstances, up to 8 phr.

Sulfur vulcanization accelerators can be used to control the time and/or temperature required for vulcanization and to improve the properties of the vulcanizate. In one embodiment, a single accelerator system may be used, i.e., primary accelerator. Conventionally and preferably, a primary accelerator(s) can be used in total amounts ranging, for example, from 0.5 to 4, alternately 0.8 to 1.5 phr. In another embodiment, combinations of a primary and a secondary accelerator might be used with the secondary accelerator, where used, being usually used in smaller amounts (for example 0.05 to 3 phr) in order to activate and to improve the properties of the vulcanizate. Combinations of these accelerators might be expected to produce a synergistic effect on the final properties and can be somewhat better than those produced by use of either accelerator alone. In addition, delayed action accelerators may be used, for example, which are not affected by normal processing temperatures but produce a satisfactory cure at ordinary vulcanization temperatures. Vulcanization retarders might also be used, where desired or appropriate. Suitable types of accelerators that may be used in the present invention may be, for example, amines, disulfides, guanidines, thioureas, thiazoles, thiurams, sulfenamides, dithiocarbamates and xanthates. In one example, the primary accelerator is a sulfenamide. If a second accelerator is used, the secondary accelerator may be, for example, a guanidine, dithiocarbamate, or thiuram compound.

In practice, sulfur-vulcanized diene-based elastomer compositions may be prepared by thermomechanically mixing the elastomer(s) and the other various ingredients in a sequentially step-wise manner followed by shaping and curing the elastomer composition to form a vulcanized product. First, for the aforesaid mixing of the elastomer(s) and other various ingredients, typically exclusive of sulfur and sulfur vulcanization accelerators, the polymer(s) and various rubber compounding ingredients are blended in one or more non-productive thermomechanical mixing stage(s) in suitable mixers. Such non-productive mixing can be conducted at temperatures in a range of 140°C to 190°C and often in a range of 150°C to 180°C.

Following such non-productive mixing stage, or stages, in a final mixing stage, sometimes referred to as a productive mix stage, sulfur and sulfur vulcanization accelerators (curatives), and sometimes optionally one or more additional ingredients, are mixed with the elastomer composition, typically at a significantly lower temperature in a range of 100°C to 120°C, which is a lower temperature than the temperatures utilized in the non-productive mix stages in order to prevent or retard premature curing of the sulfur curable rubber, which is sometimes referred to as scorching, of the composition. The various silane compounds can be included in the tire tread composition in the same or different mixing stage(s) of the tire tread composition.

The non-cured mixture, sometimes referred to as a rubber compound or composition, is typically allowed to cool, sometimes before or after intermediate mill mixing of the rubber composition, between the aforesaid various mixing steps, for example, to a temperature below 50°C. Such sequential non-productive mixing steps, including the intermediary mill mixing steps and the concluding final productive mixing step are well known to those having skill in the rubber mixing art.

By thermomechanical mixing, it is meant that the rubber composition of diene-based elastomers and compounding ingredients is mixed under high shear conditions where the mixture may autogeneously heat up, with an accompanying temperature rise, as a result of the mixing primarily due to shear and associated friction within the rubber mixture in the rubber mixer. In practice, it is readily understood by those having skill in the art that at least one non-productive (NP) mixing stage at an elevated temperature can be followed by a productive (PR) mixing stage at a lower temperature. It is also considered that other conventionally known methods for achieving mixtures of the different compounds such as, for example, a masterbatch, may be implemented instead of or in addition to the conventional dry mixing steps set out above.

Accordingly, embodiments of the invention relate to both in the "uncured" or non-vulcanized state (i.e., before curing) and in the "cured" or vulcanized state (i.e., after crosslinking or vulcanization). the compositions, tires and treads previously described. The tire can be built, shaped, molded and cured by various methods that will be readily apparent to those having skill in such art.

Examples of tire tread compositions in accordance with the description are now disclosed below.

## EXAMPLES

The following examples illustrate specific and exemplary embodiments and/or features of the embodiments of the present disclosure. The examples are provided solely for the purposes of illustration and should not be construed as limitations of the present disclosure. Numerous variations over these specific examples are possible without departing from the spirit and scope of the presently disclosed embodiments. More specifically, the diene-based elastomers, reinforcing filler(s), silane compounds, and other ingredients (e.g., processing oil, antioxidant, curative package ingredients, etc.) utilized in the following examples should not be interpreted as limiting since other such ingredients consistent with the disclosure can be utilized in substitution. In other words, the particular silane compounds (i.e., the bis(dialkylalkoxysilyl-alkyl) polysulfide coupling agent, the hydrophobating bis(trialkoxy)silane coupling agent, and the hydrophobating mono(trialkoxy)silane dispersing agent), their amounts, and their relative amounts in the following examples should be understood to apply to the more general content of the description

**TABLE 1**

| Batch Ingredient | Description | Comp. Ex. 1 | Comp. Ex. 2 | Example 1 | Example 2 |
|---|---|---|---|---|---|
| PBD | cis-PBD | 30 | 30 | 30 | 30 |
| Functionalized SSBR | SSBR | 70 | 70 | 70 | 70 |
| Naphthenic oil | Oil | 26.3 | 26.3 | 26.3 | 26.3 |
| Precipitated highly dispersible silica | Silica | 90 | 90 | 90 | 90 |
| AMS Styrene resin | AMS Styrene | 5 | 5 | 5 | 5 |
| 6PPD | antiozonant | 2.5 | 2.5 | 2.5 | 2.5 |
| Si266 | S-coup (comparative) | 9 | | | |
| Dimethylethoxysilyl propyl disulfide | S-coup (Formula I) | | 9 | 9 | 9 |
| OTES | Disper (Formula III) | | | 6 | |
| Bis(OTES) | Non-S coup (Formula II) | | | | 6 |
| Stearic acid | Fatty acid | 5 | 5 | 5 | 5 |
| ZnO | ZnO | 1.75 | 1.75 | 1.75 | 1.75 |
| Sulfur | Sulfur | 1.3 | 1.3 | 1.3 | 1.3 |
| CBS | Accel | 2.25 | 2.25 | 2.25 | 2.25 |
| DPG | Secondary accelerator | 2.5 | 2.5 | 2.5 | 2.5 |

Tire tread compositions were prepared comprising the components presented in Table 1 (above), following standard equipment and processing parameters. Performance properties of the composition were evaluated before curing (processability, RPA G'0.83 (kPa)) and after curing (Rebound 60°C (%), RPA G'10% 60°C (kPa), True Tensile (MPa), Strebler Tear (N, 100°C, 500 mm/min)). The values of that performance testing are shown in Table 2 (below).

**TABLE 2**

| | Comp. Ex. 1 | Comp. Ex. 2 | Example 1 | Example 2 |
|---|---|---|---|---|
| RPA G'0.83 (before curing) | 227 | 210 | 175 | 250 |
| RPA G'10% 60°C (after curing) | 1538 | 1460 | 1278 | 1682 |
| Rebound 60°C | 53 | 53 | 56 | 53 |
| True Tensile | 77 | 78 | 79 | 67 |
| Strebler Tear | 56 | 62 | 72 | 55 |

As can be seen from the data in Table 2, the use of the plurality of silane compounds (i.e., the bis(dialkylalkoxysilyl-alkyl) polysulfide coupling agent, the hydrophobating bis(trialkoxy)silane coupling agent, and the hydrophobating mono(trialkoxy)silane dispersing agent), influences uncured viscosity, tire tread performance characteristics, such as rolling resistance, stiffness, and tear properties.

**TABLE 3**

| Ingredients | Comp. Ex. 3 | Example 3 |
|---|---|---|
| Polymer system | 70/30 Fn-SSBR/PBD | 70/30 Fn-SSBR/PBD |
| Silica | 90 phr silica | 75 phr silica |
| Silane coupler | 9 phr Si266 | 7.5 phr mono-ethoxy silane coupler + 6 phr hydrophobating bis-silane |
| Plasticizer | 26.3 phr oil, 5 phr AMS styrene resin | 26.1 phr hydrogenated C9 modified DCPD resin |
| Cure package | 1.3 phr Sulfur, 2.25 phr CBS, 2.5 phr DPG | 1.15 phr Sulfur, 1.99 phr CBS, 2.1 phr DPG |

Utilizing different beneficial effects of ingredients and silane combinations, tire tread compositions were prepared comprising the components presented in Table 3 (above), following standard equipment and processing parameters. Performance properties of the composition were evaluated before curing (processability, RPA G'0.83 (kPa)) and after curing (Rebound 60°C (%), RPA G'10% 60°C (kPa), True Tensile (MPa), Strebler Tear (N, 100°C, 500 mm/min)). The values of that performance testing are shown in Table 4 (below).

**TABLE 4**

| | Comp. Ex. 3 | Example 3 | Standard deviation |
|---|---|---|---|
| RPA G' @0.83Hz (kPa) (before curing) | 231 | 253 | -6% |
| RPA G' @10%, 60°C (kPa) (after curing) | 1564 | 1564 | -2% |
| Rebound @60°C (%) | 52 | 56 | -2% |
| Hot Strebler @100°C (N) | 62 | 76 | -6% |
| True tensile @RT (MPa) | 75 | 124 | -11% |
| Metravib tan$\delta$ @0°C | 0.467 | 0.545 | -5% |
| DIN volume loss (mm$^3$) | 53 | 45 | -6% |

As can be seen from the data in Table 4, the use of the plurality of silane compounds (i.e., the bis(dialkylalkoxysilyl-alkyl) polysulfide coupling agent and the hydrophobating bis(trialkoxy)silane coupling agent) enables compounding approaches, such as lower silica loading, increase in traction resin, and decrease in cure package, to improve tear and tensile properties without negative impact on hysteresis and stiffness.

Test methods: For Rubber Process Analyzer (RPA), see References ASTM D5289. For Zwick rebound, see References ASTM D1054, DIN 53512. Strebler measures the interfacial adhesion between two plies of compound. A window in the separator sheet placed between two materials allows contact with each other during cure. The adhesion force is determined by pulling one compound ply away from another at a 180° angle. See references DIN 53539. For rubber tensile testing, see ASTM D412, DIN 53504. The true tensile strength is calculated as follows:

$$(true\ tensile\ strength)$$
$$= (ultimate\ tensile\ strength)$$
$$+ (ultimate\ tensile\ strength)\frac{(elongation\ at\ break)}{100}$$

For Metravib, see references ASTM D5992, DIN 53513, ISO 4664. For DIN abrasion, see references ASTM D5963, DIN 53516.

**Claims**

1. A rubber composition comprising:

   a diene-based elastomer;
   a filler that includes an inorganic filler, preferably silica; and
   a plurality of silane compounds comprising:

   (i) a bis(dialkylalkoxysilyl-alkyl) polysulfide coupling agent having the general formula (I): $R_2(R^1O)Si - (CH_2)_n - S_p - (CH_2)_m - Si(OR^2)R^3{}_2$ (I); and
   (ii) at least one alkoxysilane compound selected from the group consisting of:

   (a) a hydrophobating bis(trialkoxyl)silane coupling agent having the general formula (II): $(R^1O)_3Si - R^4 - Si(OR^2)_3$ (II), and
   (b) a hydrophobating mono(trialkoxyl)silane dispersing agent having the general formula (III): $(R^1O)_3Si - R^5$ (III);

   wherein R, $R^1$, $R^2$, and $R^3$ may be identical or different, each being selected from a monovalent C1 to C5 straight chain or branched alkyl groups, $R^4$ is selected from a divalent C3 to C18 straight chain or branched alkyl or alkenyl groups or aromatic groups, $R^5$ is selected from a monovalent C3 to C18 straight chain or branched alkyl or alkenyl groups or aromatic groups, m and *n* may be identical or different, each being in a range from 3 to 18, and *p* is in a range from 2 to 4.

2. The rubber composition according to claim 1, wherein R, $R^1$, $R^2$, and $R^3$ are independently selected from the group consisting of methyl, ethyl, or propyl; or wherein R and $R^3$ are identical and selected from the group consisting of methyl and ethyl, and $R^1$ and $R^2$ are identical and selected from the group consisting of methyl, ethyl, and propyl.

3. The rubber composition according to claim 1 or 2, wherein $R^4$ is selected from a divalent C6 to C12 straight chain alkyl, and $R^5$ is selected from a monovalent C3 to C12 straight chain alkyl.

4. The rubber composition according to at least one of the previous claims, wherein the bis(dialkylalkoxysilyl-alkyl) polysulfide coupling agent having the general Formula (I) comprises a plurality of agents having values of *p* equaling 2, 3, and 4, and wherein an average value of *p* is preferably between 2 and 3.

5. The rubber composition according to at least one of the previous claims, wherein the plurality of silane compounds includes a mixture of the bis(dialkylalkoxysilyl-alkyl) polysulfide coupling agent having the general Formula (I) and at least one of the hydrophobating bis(trialkoxyl)silane coupling agent having the general Formula (II) and/or the general Formula (III).

6. The rubber composition according to at least one of the previous claims, wherein the plurality of silane compounds includes a mixture of the bis(dialkylalkoxysilyl-alkyl) polysulfide coupling agent having the general Formula (I), the hydrophobating bis(trialkoxyl)silane coupling agent having the general Formula (II), and the hydrophobating mono(trialkoxyl)silane dispersing agent having the general Formula (III).

7. The rubber composition according to at least one of the previous claims, wherein the diene-based elastomer is selected from the group consisting of polybutadienes, natural rubber, synthetic polyisoprenes, butadiene copolymers, isoprene copolymers, and mixtures thereof, and, optionally, wherein the butadiene copolymers or isoprene copolymers are functionalized or unfunctionalized and are selected from the group consisting of butadiene-styrene copolymers, butadiene-isoprene copolymers, isoprene-styrene copolymers, butadiene-styrene-isoprene copolymers, and mixtures thereof.

8. The rubber composition according to at least one of the previous claims, wherein the filler, preferably silica, is present in the composition in an amount from 10 phr (parts by weight per hundred parts of elastomer) to 200 phr; and/or wherein the filler further comprises a carbon black.

9. The rubber composition according to at least one of the previous claims, wherein the filler comprises carbon black in a range of from 1 wt% to 50 wt%, alternatively from 5 wt% to 25 wt%, based on the entire weight of the filler.

**10.** The rubber composition according to at least one of the previous claims, wherein the plurality of silane compounds is present in the composition in a range of from 1 phr to 20 phr, alternatively from 5 phr to 15 phr.

**11.** The rubber composition according to at least one of the previous claims, wherein the plurality of silane compounds is present in the composition in a range from 0.5 to 20 phf (parts by weight per hundred parts of reinforcing filler), alternatively from 3 to 15 phf.

**12.** A tire component or tire tread (12) comprising the rubber composition according to at least one of the previous claims.

**13.** A tire comprising the tire component or tire tread (12) according to claim 12.

**14.** The tire of claim 13 wherein the tire (10) is a pneumatic tire.

**15.** A method of manufacturing the rubber composition according to at least one of the previous claims 1 to 11, wherein the plurality of silane compounds are added to rubber composition at different mixing stages of the rubber composition.

FIG. 1

Europäisches
Patentamt

European
Patent Office

Office européen
des brevets

# EUROPEAN SEARCH REPORT

Application Number

EP 22 20 2794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2004/132880 A1 (DUREL OLIVIER [FR] ET AL) 8 July 2004 (2004-07-08)<br>* tables 1-19 *<br>* paragraph [0458] *<br>----- | 1-15 | INV.<br>C08K5/5419<br>C08L15/00<br>C08L9/00<br>B60C1/00 |
| Y | US 6 608 145 B1 (LIN CHENCHY JEFFREY [US] ET AL) 19 August 2003 (2003-08-19)<br>* table 2 *<br>* column 3, lines 1-9 *<br>----- | 1-15 | C08K5/548 |
| Y | US 5 914 364 A (COHEN MARTIN PAUL [US] ET AL) 22 June 1999 (1999-06-22)<br>* examples *<br>* column 11, lines 56-62 *<br>----- | 1-15 | |

TECHNICAL FIELDS
SEARCHED      (IPC)

C08K
C08L
B60C

The present search report has been drawn up for all claims

| Place of search | Date of completion of the search | Examiner |
|---|---|---|
| Munich | 3 March 2023 | Baekelmans, Didier |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 22 20 2794

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2023

| Patent document cited in search report | | | Publication date | Patent family member(s) | | | Publication date |
|---|---|---|---|---|---|---|---|
| US 2004132880 | A1 | | 08-07-2004 | AT | 542851 | T | 15-02-2012 |
| | | | | CA | 2443137 | A1 | 24-10-2002 |
| | | | | CN | 1501959 | A | 02-06-2004 |
| | | | | EP | 1392769 | A1 | 03-03-2004 |
| | | | | FR | 2823215 | A1 | 11-10-2002 |
| | | | | JP | 4065786 | B2 | 26-03-2008 |
| | | | | JP | 2004525230 | A | 19-08-2004 |
| | | | | KR | 20040012749 | A | 11-02-2004 |
| | | | | MX | PA03009193 | A | 17-02-2004 |
| | | | | US | 2004132880 | A1 | 08-07-2004 |
| | | | | WO | 02083782 | A1 | 24-10-2002 |
| US 6608145 | B1 | | 19-08-2003 | CN | 1469898 | A | 21-01-2004 |
| | | | | EP | 1325071 | A2 | 09-07-2003 |
| | | | | JP | 2004511598 | A | 15-04-2004 |
| | | | | US | 6608145 | B1 | 19-08-2003 |
| | | | | WO | 0231034 | A2 | 18-04-2002 |
| US 5914364 | A | | 22-06-1999 | BR | 9800807 | A | 14-12-1999 |
| | | | | CA | 2228987 | A1 | 10-09-1998 |
| | | | | EP | 0864605 | A2 | 16-09-1998 |
| | | | | JP | H10251450 | A | 22-09-1998 |
| | | | | US | 5914364 | A | 22-06-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5852099 A
- US 5900449 A

**Non-patent literature cited in the description**

- *Journal of the American Chemical Society,* 1938, vol. 60, 309
- The Vanderbilt Rubber Handbook. 1978, 344-346